# EUROPEAN PATENT APPLICATION

(11) **EP 2 096 876 A1**
(43) Date of publication of application: **02.09.2009**
(21) Application number: 07817188.1
(22) Date of filing: 31.10.2007
(51) Int. Cl.: H04Q 7/22, H04M 3/42

(54) **METHOD AND DEVICE FOR TESTING SERVICE TYPE**

(30) Priority: 29.11.2006 CN 200610157185
(71) Applicant: Huawei Technologies Co., Ltd., Shenzhen, Guangdong Province 518129 (CN)
(72) Inventor: MU, Lichang, Shenzhen Guangdong 518129 (CN); JIANG, Qingsong, Shenzhen Guangdong 518129 (CN); ZHANG, Hao, Shenzhen Guangdong 518129 (CN)
(74) Representative: Körber, Martin Hans
(86) International application number: PCT/CN2007/070997
(87) International publication number: WO 2008/064597

(57) **Abstract**

A method and a device for testing the service type. The method comprises the following steps: receiving the send routing information message to judge the service type of this call; and returning the send routing response information with the service type information of this call.

## Description

This application claims priority to Chinese Patent Application No. 200610157185.2, filed with the Chinese Patent Office on November 29, 2006 and entitled "METHOD AND DEVICE FOR DETECTING SERVICE TYPE", which is hereby incorporated by reference in its entirety.

### Field of the Invention

The present invention relates to the field of 3G technologies, and in particular to a technology of detecting a data service in a Gateway Mobile Switching Center (GMSC) in the network architecture where the bearing function is separated from the controlling function.

### Background of the Invention

In network architectures prior to the Third Generation Partner Project of mobile communication protocol Revision 99 standard (3GPP R99), bearing and controlling are integrated and all the connections are Time Division Multiplex (TDM) based, so that it is sufficient that the GMSC accomplishes a TDM network access for a data service call, and a data bearer is transported transparently over a TDM connection since there is no voice compression codec, thus incurring no additional requirement.

In networks subsequent to the 3GPP R4, bearing and controlling are separated, a connection of a bearer network is substantially non-TDM based, and a compression codec is required to bear a core network service. Since compression codecs are primarily used for transmission of voice over an inter-office IP bearer and the majority thereof cannot satisfy a requirement on transmission of a data service, therefore, for a data service call, the GMSC is required to be able to identify that the current call is a data service call and to instruct a Media Gateway (MGW) to adopt a G.711 codec in order for transparent transport of a data bearer over an IP network.

The following several solutions are adopted in the prior art to address the issue of detecting a data service in a GMSC scenario for R4 networking.

1. In a gateway MGW in-band detection solution, a gateway detects a data service code stream or a handshake signal of an in-band data service, identifies and reports to an MSC server and then MSC server issues an instruction of a codec modification operation, thereby accomplishing detection and transparent transmission of the GMSC data service.

A problem of the gateway in-band detection solution lies in that a modem/IWF (InterWorking Function) has to generate a handshake signal (a detection signal tone) in accordance with the protocol standard, while a modem/IWF, without generation of any handshake signal, transmits data directly, therefore there exists a case that initial data cannot be transmitted normally in the gateway detection solution; and since some low-rate data services may not be detected properly, the media gateway detection solution appears less reliable for services on some older data terminal, especially in those developed European countries, for example, where some legacy telecommunication devices are still being used in existing networks.

2. For a data service call identifiable by the calling side, an originating office can carry in an outgoing Initial Address Message (IAM) message, relevant data service bearer information to instruct a backward switch to use a data bearer for establishment of the current call.

The solution of carrying data bearer information in an outgoing IAM message has requirements on a calling office and a transfer office, and not all the switches in existing networks can trigger carrying and transferring of an IAM message containing data bearer information according to the calling side. For a data service, it is common that only the called side can make an accurate determination, and information of the calling side may not be taken as a final determination, for example, in the case of a facsimile machine as the calling side.

3. If the called office identifies a data service bearer upon receiving a call confirm message from the called user, then it can notify the calling office, through a backward Answer Message (ANM), that the current call is a data service call, and the originating office can switch to the data service bearer upon receiving the backward ANM message to thereby transmit transparently the current call.

This solution has a relative lag of bearer switching, which may influence the accuracy of implementing the service, and the called office carries bearer information to instruct the calling side to switch the bearer, which may highly demand for the calling switch and thus result in difficulty of spreading the service.

### Summary of the Invention

An object of the invention is to provide method and device for detecting the type a service to address the problem that a GMSC determines the type of a call service and instructs a gateway to use a corresponding codec.

In order to attain the above object, technical solutions adopted for the invention are as follows.

A service type detection method includes the steps of:
receiving a Send Routing Information message and determining the service type of a current call; and
returning a Send Routing Information Acknowledge message carrying service type information of the current call.

An entity receiving the Send Routing Information message is a home location register, HLR; and an entity receiving the Send Routing Information Acknowledge message is a gateway mobile switching center (GMSC).

A service type detection device includes:
a reception module, adapted to receive a Send Routing Information message;
a service type information processing module, adapted to determine the service type of the current call; and
a transmission module, adapted to return a Send Routing Information Acknowledge message including service type information of the current call.

A home location register (HLR) includes:
a reception module, adapted to receive a Send Routing Information message;
a service type information processing module, adapted to determine the service type of the current call; and
a transmission module, adapted to return a Send Routing Information Acknowledge message including service type information of the current call.

A gateway mobile switching center (GMSC) includes:
a service type identification module, adapted to receive a Send Routing Information Acknowledge (SRI_ACK) message including service type information of a current call, and to identify the service type of the current call in accordance with the service type information of the current call; and
a first call bearer establishment module, adapted to instruct in accordance with the identified service type of the current call a media gateway MGW to select a codec corresponding to the service type for establishment of a call bearer.

The invention overcomes the drawbacks of the prior art in such a solution that a Home Location Register (HLR) is used to determine the service type of a current call and passes the service type information to the GMSC in the optional information element added in the SRI_ACK message and the GMSC hereby instructs the MGW to use a corresponding codec for establishment of technical solution for a call bearer, so that establishment and relaying of a data service call bearer for 3GPP R4 networking can be addressed effectively through out-band signaling to ensure smooth completion of a data service for R4 networking and avoid the impossibility of successful establishment of a data service, the impossibility of normal transmission of the part of initial data, a long duration, and various requirements and constraints on a modem and an IWF in the in-band detection solutions.

### Brief Description of the Drawings

Fig.1 is a flow chart of a first embodiment of the present invention; and

Fig.2 is a flow chart of a second embodiment of the present invention.

### Detailed Description of the Embodiments

The invention includes the following: an HLR determines whether the current call is a voice service call or a data service call in accordance with subscription information of the called side upon receiving a Send Routing Information (SRI) message sent from a GMSC, and then adds an optional information element in an SRI_ACK message sent to the GMSC to notify the GMSC about whether the current call is a voice service call or a data service call, and if it is a data service, then the GMSC notifies an MGW to use the G.711 protocol for establishment of a call bearer, thereby accomplishing transparent transmission of the data service.

Detailed descriptions are given below with reference to the drawings and the embodiments.

Embodiment 1: The called side is a uni-number mobile user.

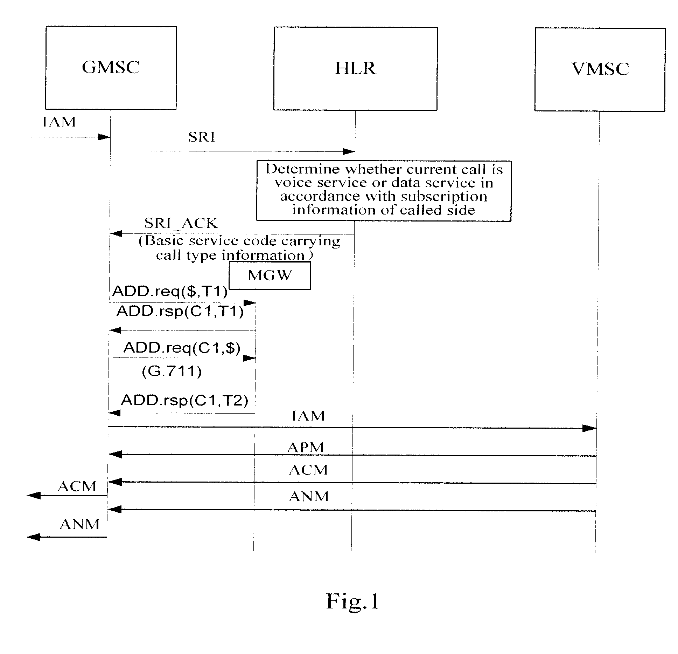

A typical data service application for 3GPP R4 networking is as illustrated in Fig.1, where an incoming call accesses the office through a GMSC and arrives at a Visited Mobile Switching Center (VMSC) for mobile terminating (MT) of the call. Integrated Service Digital Network (ISDN) User Part ISDN (ISUP) signaling can be used for the access of the office, an IP bearer can be used from the GMSC to the VMSC, and Bearer Independent Call Control Protocol (BICC) signaling can be used between office.

As illustrated in Fig.1, the flow of this embodiment generally includes the following steps.

The GMSC sends an SRI message to an HLR upon receiving an IAM message.

The HLR determines whether the current call is a voice service call or a data service call in accordance with subscription information of the called side, and then sends to the GMSC an SRI_ACK message, in which an optional information element of basic service code is added to carry service type information of the current call, to notify the GMSC about whether the current call is a voice service call or a data service call.

The GMSC determines whether the current call is a voice service or a data service in accordance with the information carried in the basic service code in the SRI_ACK message.

If it is a voice service, then the GMSC sends an ADD.req (H.248 bearer establishment message) message to the MGW, to instruct the MGW to use a compression codec for establishment of the bearer, and the GMSC proceeds with a subsequent process of the voice service upon receiving an ADD.rsp (H.248 bearer establishment response message) from the MGW.

If it is a data service, then the GMSC sends an ADD.req message to the MGW, to instruct the MGW to use a G.711 codec to establish the bearer for transparent transmission of the data.

After selecting G.711 codecs, the GMSC sends to a Visited Mobile Switching Center (VMSC) an IAM message with a selected codec list of G.711.

The office VMSC selects a G.711 codec algorithm upon receiving the IAM message and returns an Application Pass Message (APM) to the GMSC.

After ring of the terminal of the called user, a response message of Address Complete Message (ACM) is returned to the GMSC, and the GMSC will transmit transparently the ACM message to the calling office.

After the called user answers the call, an Answer Message (ANM) is returned to the GMSC, and the GMSC will transmit transparently the ANM message to the calling office, and at this time the call is put through normally, and the service data will be transmitted over the established G.711 bearer.

Embodiment 2: The called side is a dual-number mobile user.

For a dual-number mobile user, when the gateway office GMSC queries the HLR about route data, the HLR determines whether the current call is a data service or a voice service in accordance with a correspondence relationship between subscription information of the called side and a called number in view of the differences between subscribed voice and data service, and then returns to the GMSC an SRI_ACK message in which an optional information element of, for example, basic service code is added to carry service type information. Dependent on the type of the current call, the GMSC can issue a different codec to the corresponding gateway for establishment of a call bearer: a compression codec algorithm is adopted for a voice call and G.711 transparent transmission is adopted for a data service call to establishment the call bearer.

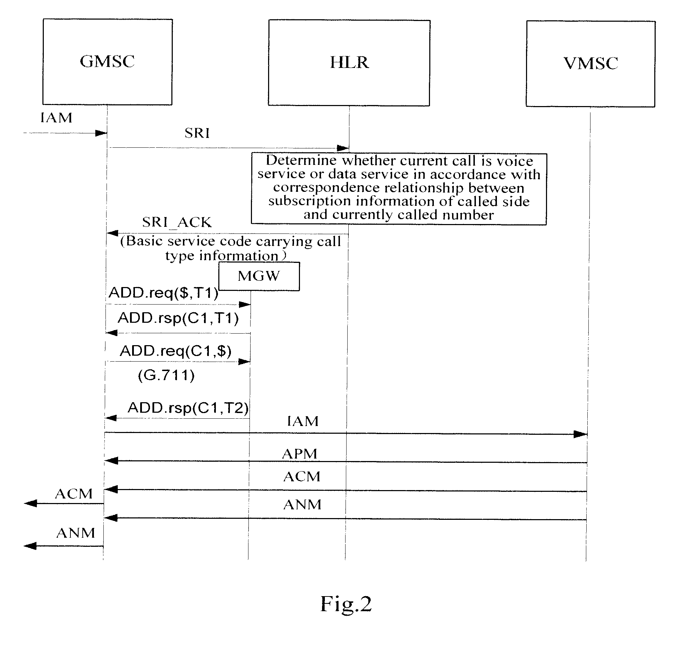

The flow of the embodiment as illustrated in Fig.2 includes the following steps.

The GMSC sends an SRI message to the HLR upon receiving an IAM message.

The HLR determines whether the current call is a voice service call or a data service call in accordance with a correspondence relationship between subscription information of the called side and a called number, and then sends to the GMSC an SRI_ACK message, in which an optional information element of basic service code is added to carry service type information of the current call, to notify the GMSC about whether the current call is a voice service call or a data service call.

The GMSC determines whether the current call is a voice service or a data service in accordance with the service type information carried in the basic service code in the SRI_ACK message.

If it is a voice service, then the GMSC sends an ADD.req message to the MGW, to instruct the MGW to use a compression codec for establishment of the bearer, and the GMSC proceeds with a subsequent process of the voice service upon receiving an ADD.rsp (H.248 bearer establishment response message) from the MGW.

If it is a data service, then the GMSC sends an ADD.req message to the MGW, to instruct the MGW to use a G.711 codec for establishment of the bearer for transparent transmission of the data.

After selecting G.711 codecs, the GMSC sends to the Visited Mobile Switching Center (VMSC) an IAM message with a selected codec list of G.711.

The office VMSC selects a G.711 codec algorithm upon receiving the IAM message and returns an Application Pass Message (APM) to the GMSC.

After ring of the terminal of the called user, a response message of Address Complete Message (ACM) is returned to the GMSC, and the GMSC will transmit transparently the ACM message to the calling office.

After the called user answers the call, an Answer Message (ANM) is returned to the GMSC, and the GMSC will transmit transparently the ANM message to the calling office, and at this time the call is put through normally, and the service data will be transmitted over the established G.711 bearer.

The foregoing descriptions are merely illustrative of the preferred embodiments of the invention but not limitative of the scope of the invention. Any modifications, equivalent alternatives, adaptations, etc., made without departing from the scope of the invention shall be encompassed within the scope of the invention.

## Claims

1. A service type detection method, comprising:
receiving a Send Routing Information, SRI, message and determining the service type of a current call; and
returning a Send Routing Information Acknowledge, SRI_ACK, message carrying service type information of the current call.

2. The method according to claim 1, wherein the determination is made in accordance with subscription information of a called user in the current call or the subscription information of the called user and a currently called number.

3. The method according to claim 1, wherein the SRI_ACK message is extended to carry the service type information of the current call.

4. The method according to claim 3, wherein the extending the SRI_ACK message comprises: adding in the SRI_ACK message an optional information element for carrying service type information of the current call.

5. The method according to claim 4, wherein the optional information element is a basic service code.

6. The method according to any one of claims 1 to 5, wherein:
an entity receiving the SRI message is a home location register, HLR; and
an entity receiving the SRI_ACK message is a gateway mobile switching center, GMSC.

7. The method according to claim 6, wherein after the GMSC receives the SRI_ACK message, the method further comprises: instructing, in accordance with the service type information of the current call therein, a media gateway, MGW, to select a codec corresponding to the service type for establishment of a call bearer.

8. The method according to claim 7, wherein the instructing the MGW to select the codec corresponding to the service type for establishment of the call bearer comprises:
instructing the MGW to use a compression codec for establishment of the call bearer if the service type of the current call is a voice service; and
instructing the MGW to use a G.711 codec for establishment of a call bearer, if the service type of the current call is a data service.

9. The method according to claim 7, wherein after the GMSC instructs the media gateway to use the G.711 codec for establishment of the call bearer, the method further comprises: sending an initial address message, IAM, to a visited mobile switching center, VMSC, to instruct the VMSC to select a codec corresponding to the service type.

10. A service type detection device, comprising:
a reception module, adapted to receive a Send Routing Information, SRI, message;
a service type information processing module, adapted to determine the service type of a current call; and
a transmission module, adapted to return a Send Routing Information Acknowledge, SRI_ACK, message comprising service type information of the current call.

11. The device according to claim 10, wherein the determination is made in accordance with subscription information of a called user in the current call or the subscription information of the called user and a currently called number.

12. The device according to claim 10, wherein the service type information of the current call carried in the SRI_ACK message is carried in an optional information element added in the SRI_ACK message.

13. A home location register, HLR, comprising:
a reception module, adapted to receive a sending routing information message;
a service type information processing module, adapted to determine the service type of the current call; and
a transmission module, adapted to return a Send Routing Information Acknowledge, SRI_ACK, message comprising service type information of the current call.

14. The home location register according to claim 13, wherein the service type information of the current call carried in the SRI_ACK message is carried in an optional information element added in the SRI_ACK message.

15. A gateway mobile switching center, GMSC, comprising:
a service type identification module, adapted to receive a Send Routing Information Acknowledge, SRI_ACK, message comprising service type information of a current call, and to identify the service type of the current call in accordance with the service type information of the current call; and
a first call bearer establishment module, adapted to instruct, in accordance with the identified service type of the current call, a media gateway, MGW, to select a codec corresponding to the service type for establishment of a call bearer.

16. The gateway mobile switching center according to claim 15, further comprising:
a second call bearer establishment module, adapted to instruct, in accordance with the identified service type of the current call, a visited mobile switching center, VMSC, to select a codec corresponding to the service type.
